# EUROPEAN PATENT SPECIFICATION

(11) **EP 3 817 883 B1**
(45) Date of publication and mention of the grant of the patent: **06.07.2022**
(21) Application number: 19737910.0
(22) Date of filing: 20.06.2019
(51) Int. Cl.: B23K 9/013, B23K 9/16, B23K 9/32, G05G 1/30

(54) **SWITCH UNIT FOR MANAGING SIGNALS IN WELDING AND/OR CUTTING SYSTEMS, SYSTEM EQUIPPED WITH SAID SWITCH UNIT AND METHOD OF MANAGING SAID SIGNALS EMITTED BY THE SWITCH UNIT IN A WELDING AND/OR CUTTING SYSTEM**
SCHALTEREINHEIT ZUM VERWALTEN VON SIGNALEN IN SCHWEISS- UND/ODER SCHNEIDSYSTEMEN, MIT DIESER SCHALTEINHEIT AUSGERÜSTETES SYSTEM UND VERFAHREN ZUR VERWALTUNG DER VON DER SCHALTEREINHEIT AUSGESENDETEN SIGNALE IN EINEM SCHWEISS- UND/ODER SCHNEIDESYSTEM
UNITÉ DE COMMUTATION DESTINÉE À GÉRER DES SIGNAUX DANS DES SYSTÈMES DE SOUDAGE ET/OU DE COUPE, SYSTÈME ÉQUIPÉ DE LADITE UNITÉ DE COMMUTATION ET PROCÉDÉ DE GESTION DESDITS SIGNAUX ÉMIS PAR L'UNITÉ DE COMMUTATION DANS UN SYSTÈME DE SOUDAGE ET/OU DE COUPE

(30) Priority: 05.07.2018 IT 201800006961
(43) Date of publication of application: 12.05.2021
(73) Proprietor: Trafimet Group S.p.A., 36020 Castegnero (VI) (IT)
(72) Inventor: IMI, Attilio, 33010 Pagnacco (UD) (IT)
(74) Representative: Ziliotto, Tiziano
(86) International application number: PCT/IB2019/055205
(87) International publication number: WO 2020/008289

(56) References cited:
- WO-A1-2015/151051
- US-A1- 2011 106 068
- US-A1- 2011 248 009
- US-A1- 2014 144 898
- US-B1- 6 420 680

## Description

### TECHNICAL FIELD OF THE INVENTION

The present invention concerns the field of welding and/or cutting system according to the preamble of claim 1 (see for example WO 2015/151051 A1). More specifically, the present invention concerns the management of signals for welding and/or cutting systems. More specifically, the present invention concerns a switch unit for the management of signals, suited to be used in welding and/or cutting systems. Even more specifically, the present invention concerns the management of the signal designed to activate the LCD filter in eye protection shields for the operators of said systems.

### PRIOR ART

Several control systems for welding and/or cutting systems are known in the art. The welding and/or cutting systems of the known type essentially comprise a generator and a welding and/or cutting torch suited to be connected to the generator. The torch is the part of the system that can be handled by the operator and is provided with an actuator button that, once activated, makes it possible to carry out the welding and/or cutting operation on the workpiece.

The system is also preferably equipped with a cooling circuit and/or a circuit suited to convey a protective gas, depending on the welding technology actually used for the welding and/or cutting process, for example technology of the MMA, TIG, MIG/MAG type, plasma or electrode technology, with or without protective gas.

The systems of the known type furthermore include a shield designed to protect the operator's eyes, preferably a shield provided with an LCD filter that can be activated at the moment when the welding and/or cutting operation is performed. However, the known systems pose some drawbacks.

A first drawback is related to the difficulty of managing the signals that control the various parts of the system following the activation of the actuator button. Another drawback is constituted by the overall dimensions of said systems, which are complicated by the presence of cables for communication with the other components of the welding system.

A further drawback is constituted by the cost of these systems.

It is thus an object of the present invention to provide a welding and/or cutting system comprising a switch unit that resolves, at least partially, the problems mentioned above.

More specifically, it is an object of the present invention to provide a welding and/or cutting system in which the switch unit makes it possible to reduce the complexity inherent to the management of the signals generated when it is activated.

It is another object of the present invention to provide a welding and/or cutting system in which the switch unit makes it possible to reduce the complexity inherent to the construction of the system.

It is a further object of the present invention to provide a welding and/or cutting system that makes it possible to reduce production and/or maintenance costs. Switch units for welding and/or cutting system are known from documents US 6 420 680 B1 and US 2011/248009 A1.

### SUMMARY

The present invention intends to provide a welding and/or cutting system equipped with a switch unit capable of autonomously generating two signals, wherein the second signal is generated with a predetermined delay with respect to the first signal.

According to the present invention, a welding and/or cutting system is defined in claim 1, comprising a generator, a welding and/or cutting torch, a control unit and a switch unit suited to be activated by an operator in order to carry out a welding and/or cutting operation through the activation of said generator, wherein said switch unit comprises:
- a movable actuator element suited to be activated by said operator;
- first generation means suited to generate a signal;
- second generation means suited to generate a signal;
said first generation means and said second generation means being activated in sequence by said movable element during its movement, in such a way that said second generation means generate a second signal with a predetermined delay with respect to a first signal generated by said first generation means.

Preferably, the first generation means comprise a first switch and/or said second generation means comprise a second switch.

Preferably, the first switch is activated at the end of a first stroke of the movable element and the second switch is activated at the end of a second stroke of the movable element, said second stroke being longer than said first stroke.

Preferably, the first stroke defines the extent of the movement of the movable element from its rest position to the position of activation of the first switch and the second stroke defines the extent of the movement of the movable element from its rest position to the position of activation of the second switch.

Preferably, the first signal and the second signal are generated by the first generation means and by the second generation means, respectively, during the movement of the movable element in a first activation direction.

Preferably, the second generation means and the first generation means are activated in sequence by the movable element during its movement in a second release direction opposite said first activation direction, in such a way that the first generation means generate a fourth signal with a predetermined delay with respect to a third signal generated by the second generation means.

Preferably, the first switch and/or the second switch comprise a mechanical switch.

Preferably, the first switch and/or the second switch comprise a magnetic switch. Preferably, the movable element comprises a lever.

Preferably, the switch unit furthermore comprises a wireless signal transmission unit designed to transmit the first signal and/or the second signal.

Preferably, the switch unit furthermore comprises a power supply unit for the transmission unit.

Preferably, the power supply unit comprises at least one battery.

Preferably, the power supply unit comprises an electric energy generator.

Preferably, the electric energy generator comprises an induction generator.

Preferably, the electric energy generator transforms the mechanical energy deriving from the movement of the movable element into electric energy.

According to the present invention, the system furthermore comprises a protection unit for the operator, comprising a protection shield, preferably an LCD filter, wherein the protection unit can be activated by an activation signal. Preferably, the protection unit comprises a wireless signal reception unit.

Further according to the present invention, the first signal generated by the switch unit corresponds to an activation signal intended to activate the protection unit and the second signal generated by the switch unit corresponds to an activation signal intended to activate the generator.

Preferably, the system comprises a conveyance unit designed to convey a protective gas or gas mixture for welding applications.

Preferably, the first signal generated by the switch unit corresponds to an activation signal intended to activate the conveyance unit and the second signal generated by the switch unit corresponds to an activation signal intended to activate the generator.

### BRIEF DESCRIPTION OF THE DRAWINGS

Further advantages, objects and characteristics, as well as further embodiments of the present invention, are defined in the claims and will be illustrated in the following description, with reference to the enclosed drawings; in the drawings, corresponding or equivalent characteristics and/or components of the present invention are identified by the same reference number. Below there is a description of the drawings represent preferred embodiments of the invention :
- Figure 1 shows a schematic view of a welding and/or cutting system according to a preferred embodiment of the present invention;
- Figure 2 shows an element of the system shown in Figure 1 isolated from the rest;
- Figures 3 and 4 show the element of Figure 2 in two different operating positions;
- Figure 5 shows the trend of some signals related to the operation of the system of Figure 1;
- Figure 6 shows a variant of the operation signals shown in Figure 5;
- Figure 7 shows an axonometric view of a construction variant of the element shown in Figure 2;
- Figure 8 shows a side plan view of the element shown in Figure 7;
- Figure 9 shows a variant embodiment of the element of Figure 2;
- Figure 10 shows another variant embodiment of the element of Figure 2;
- Figure 11 shows the element of Figure 10 in a specific operating position;
- Figure 12 shows a variant embodiment of the system of Figure 1;
- Figure 13 shows an element of the system shown in Figure 12 isolated from the rest;
- Figure 14 shows a variant embodiment of the element of Figure 13.

### DETAILED DESCRIPTION

The present invention is described here below with reference to specific embodiments illustrated in the attached drawings. However, the present invention is not limited to the specific embodiments illustrated in the following detailed description and represented in the figures; rather, the embodiments described simply exemplify the various aspects of the present invention, the scope of which is defined in the claims.

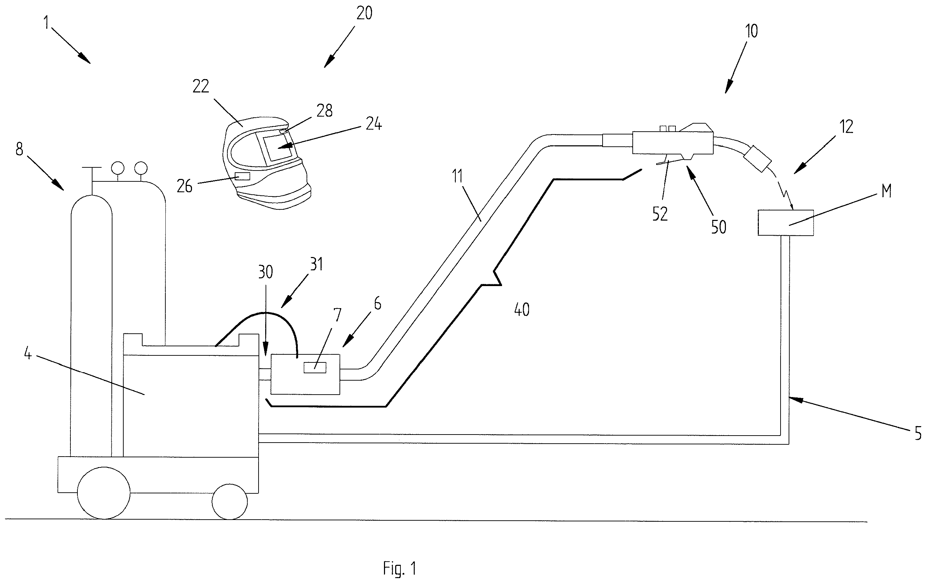

Figure 1 shows a schematic view of a welding and/or cutting system according to an embodiment of the present invention.

The welding and/or cutting system according to the present invention may comprise welding machines using technology of the MMA, TIG, MIG/MAG type, plasma or electrode technology, with or without protective gas. Here below, we make reference to a welding system for the sake of simplicity, but what is explained applies also to a cutting system.

The welding system 1 shown in the figure preferably comprises a generator 4, a welding torch 10 (or cutting torch in cutting systems) and a control unit 6.

The welding system 1 furthermore comprises a switch unit 50 designed to be activated by the operator in order to carry out a welding operation (or cutting operation in the case of cutting systems) through the activation of said generator 4.

In the embodiment shown in Figure 1, the switch unit 50 is directly associated with the welding torch 10. The operator holding the welding torch 10 uses the same hand to activate the switch unit 50 and carry out the welding operation on the element to be welded M.

The generator 4 is preferably connected to a cylinder 8 containing a protective gas for welding and/or to a cooling circuit (not illustrated).

An earth cable 5 connects the generator 4 to the element to be welded M, while a connection element 40 connects the generator 4 to the torch 10.

The connection element 40 preferably comprises a connector 30, a cable bundle 11, pipes for the passage of water, if there is a cooling circuit for cooling the torch 10, and pipes for the passage of pressurized air, in the case of a plasma cutting torch, or for the passage of a protective gas or gas mixture, if the welding system is designed for the use of the latter (for example, the gas contained in the cylinder 8).

The cable bundle 11 connects the torch 10 to the connector 30 and the connector 30 connects the cable bundle 11, and thus the torch 10, to the generator 4. The cable bundle 11 comprises also at least one or more control cables 11a suited to control the torch 10 and one or more power cables for the torch 10, not illustrated in the figure.

The earth cable 5, closing the circuit constituted by the generator 4, the torch 10 and the element to be welded M, allows the start of the welding operations, in particular the striking of the welding arc 12.

In the embodiment illustrated in the figure, the control unit 6 is mounted between the connector 30 and the cable bundle 11. Alternatively, the control unit 6 can be mounted in any other position deemed suitable, for example in/on the grip of the torch 10.

The control unit 6 preferably comprises first wireless signal transmission/reception means 7.

The first transmission/reception means 7 preferably comprise a radio frequency unit. Preferably, said radio frequency unit is of the Bluetooth^{®} or ZigBee or Enocean type.

In a preferred variant embodiment, the first transmission/reception means 7 preferably comprise an infrared unit.

The first transmission/reception means 7 allow data and/or information to be transferred to the other components of the welding system 1 and/or to any other external device comprising Bluetooth^{®} or ZigBee or Enocean technology, for example a tablet or a similar device.

According to the embodiment illustrated, the welding system 1 comprises a protection unit 20 comprising a protective helmet 22 designed to be worn by the operator while welding. The protection unit 20, furthermore, comprises a protection shield 24, preferably an LCD filter, and second wireless signal transmission/reception means 26.

The protection unit 20, furthermore, preferably comprises optical sensors 28 designed to detect the light intensity in the spectrum of visible light and of infrared light.

The second transmission/reception means 26 preferably comprise a radio frequency unit. Preferably, said radio frequency unit is of the Bluetooth^{®} or ZigBee or Enocean type.

The second transmission/reception means 26 allow data and/or information to be transferred from the protection unit to the other components of the welding system and/or to any other external device comprising Bluetooth^{®} or ZigBee or Enocean technology, for example a tablet or a similar device. More specifically, the second transmission/reception means 26 allow data and/or information to be transferred from or towards the first transmission/reception means 7.

The protection unit 20 preferably comprises a power supply unit (not shown). The power supply unit preferably comprises rechargeable or non-rechargeable batteries and/or solar cells.

The protection unit 20 is suited to protect the operator's eyes from the dangerous radiation produced by the welding arc 12 during the welding operations. This is obtained by conveniently darkening the protection shield 24.

The LCD filter is preferably constituted by several layers comprising Polaroid sheets, glass elements and LCD. An LCD filter provides for filtering and attenuating light at certain wavelengths and, by changing the control voltage Vc applied to it, it is possible to vary the degree of filtering/attenuation of light for the different wavelengths, in particular for the wavelengths in the visible spectrum. The degree of darkening (darkening means the filtering and/or attenuation of radiation at a certain wavelength) ensured by an LCD filter is measured in DIN degrees.

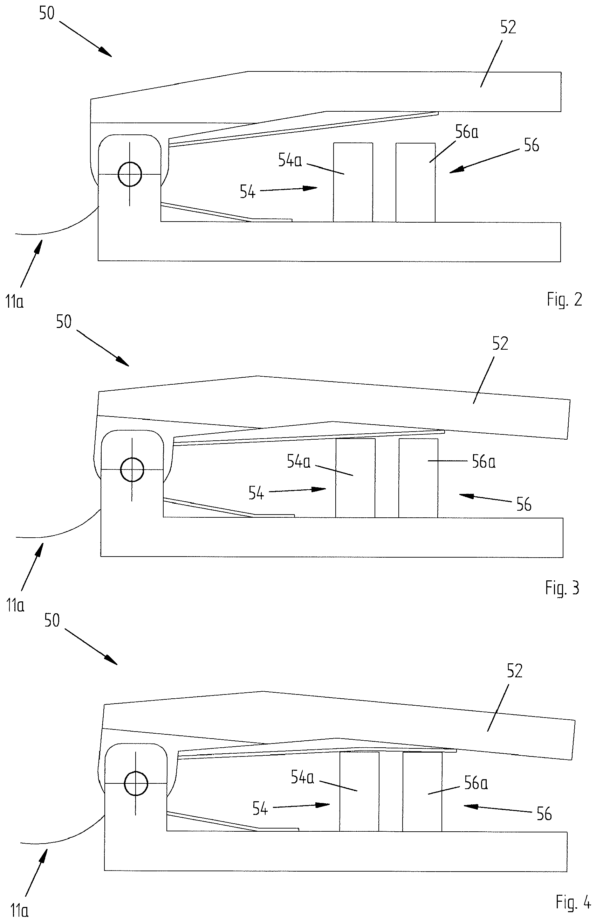

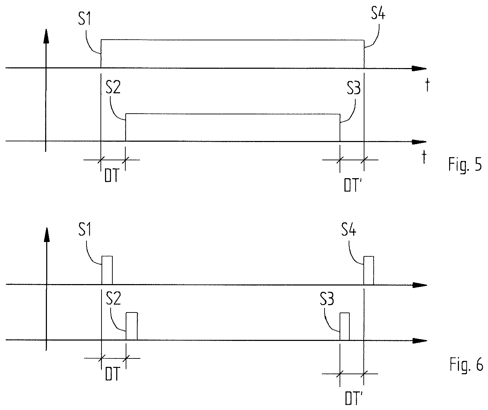

According to an embodiment of the present invention, the switch unit 50 comprises a movable actuator element 52 suited to be activated by the operator, first generation means 54 suited to generate a first signal S1 and second generation means 56 suited to generate a second signal S2, as shown in particular in Figures 2 and 5. The two signals S1, S2 are preferably identified by the respective rising edges.

The movable actuator element 52 preferably comprises a lever 52 suited to be rotated around its fulcrum. In variant embodiments, said movable element can be made in a different manner, for example it can be a linear push button, as better illustrated also below with reference to preferred variant embodiments.

According to the invention, the first generation means 54 and the second generation means 56 are shaped in such a way that they can be activated in sequence by the movable element 52 during its movement, in such a way that the second signal S2 is generated with a delay DT with respect to the first signal S1 (as indicated in Figure 5).

According to the present invention and regarding the system 1 shown and described in Figure 1, the first signal S1 and the second signal S2 generated by the switch unit 50 are acquired by the control unit 6 and respectively correspond to the activation signal of the protection unit 20 and to the activation signal of the generator 4.

The first signal S1 and the second signal S2 generated by the switch unit 50 are acquired by the control unit 6 through the control cables 11a of the cable bundle 11. The first signal S1 is transmitted to the protection unit 20 through the first transmission/reception means 7 and received by the protection unit 20 through the second transmission/reception means 26.

In a preferred variant embodiment, in the case where the first signal S1 is transmitted to the protection unit 20 through the first transmission/reception means 7 constituted by an infrared unit, the signal S1 is preferably received/detected by the optical sensors 28 operating in the infrared spectrum. Advantageously, thanks to the delay DT introduced between the first signal S1 and the second signal S2 by the switch unit 50, the activation of the generator 4 with the generation of the arc 12 takes place with a predetermined delay, for example a delay DT of 2 tenths of a second, with respect to the activation of the protection unit 20 and in particular with respect to the darkening of the protection shield 24. This ensures that at the moment of the beginning of the welding operation with the striking of the arc 12 the protective action for the operator's eyes is active.

Therefore, the management of the two signals S1, S2 takes place directly and in a simple manner through the switch unit 50, which automatically generates the two signals S1, S2 in sequence with the desired predetermined delay DT.

According to the preferred embodiment illustrated in Figure 2, the first generation means 54 comprise a first switch 54a and the second generation means 56 comprise a second switch 56a. Preferably, the first switch 54a and the second switch 56a are switches of the mechanical type. Preferably, the first switch 54a and the second switch 56a are aligned with respect to the direction of movement of the movable element 52.

The first switch 54a is activated by contact at the end of a first stroke of the movable element 52 (as shown in Figure 3) and the second switch 56a is activated by contact at the end of a second stroke of the movable element 52 (see Figure 4), said second stroke being longer than said first stroke. It should be noted that the expression "first stroke" defines the extent of the movement of the movable element 52 from its rest position (as shown in Figure 2) to the position of activation of the first switch 54a (as shown in Figure 3) and the expression "second stroke" defines the extent of the movement of the movable element 52 from its rest position (as shown in Figure 2) to the position of activation of the second switch 56a (as shown in Figure 4).

In variant embodiments, the switches and their activation may be of a different type, for example reed magnetic switches or Hall effect switches.

Following the activation of the movable element 52, therefore, the welding operation is started, the operator's eyes being protected by the protection unit 20. During the welding step, the control unit 6 detects that the movable element 52 is active through the control cables 11a and consequently manages the system 1 in such a way as to maintain the generator 4 activated for the generation of the arc 12.

This operating condition continues as long as the operator does not release the movable element 52.

When the operator releases the movable element 52 in order to end the welding operation, the second switch 56a and the first switch 54a are deactivated in sequence, with a delay DT' preferably corresponding to the delay DT introduced during the activation step. The deactivation of the second switch 56a is indicated as a third signal S3 corresponding to the falling edge in Figure 5 and the deactivation of the first switch 54a is indicated as a fourth signal S4 corresponding to the falling edge.

The control unit 6 that acquires these changes in the status of the switches 54a, 56a acts consequently, first interrupting the generator 4 and then sending a signal intended to deactivate the protection unit 20 after a predetermined time interval DT'.

Advantageously, it is ensured that the protection unit 20 is deactivated once the welding arc 12 has been interrupted, thus guaranteeing that the operator's eyes are protected.

According to a preferred embodiment and to the time diagram of Figure 5, the first and the second generation means 54, 56 generate a substantially square signal for their entire activation time, in which it is possible to identify the signals S1, S2, S3, S4 as previously described.

In a preferred variant embodiment, shown by way of example in Figure 6, the first and the second generation means 54, 56 generate signals in the form of a pulse, maintaining the meaning and the time sequence of the same unaltered according to the description provided with reference to Figure 5. These signals are advantageously generated for a short period of time in the steps of activation and release of the movable element 52.

Figures from 7 to 11 show some possible preferred embodiments of the switch unit 50 according to the characteristics described above. The component parts equivalent to those present in the preferred embodiment described above are identified by the same reference numbers.

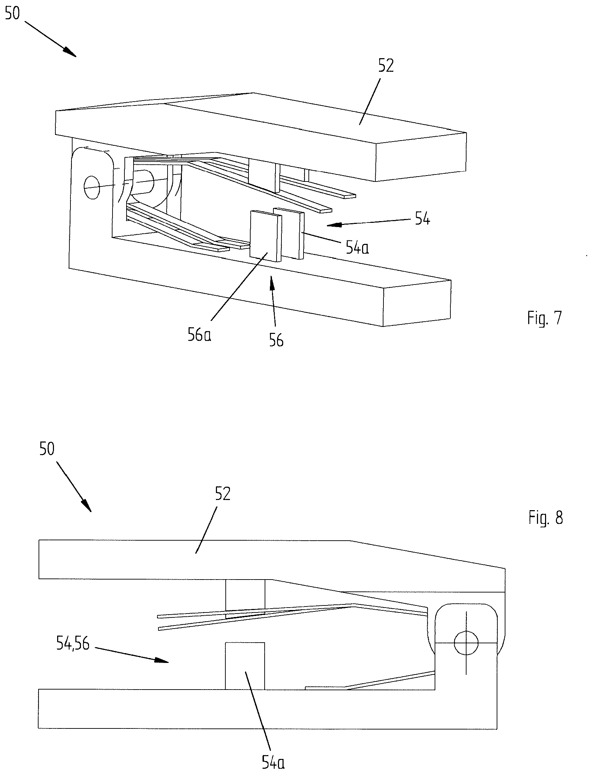

The embodiment shown in Figures 7 and 8 differs from the embodiment described above with reference to Figure 2 in that the first generation means 54 (switch 54a) and the second generation means 56 (switch 56a) are arranged side by side instead of being aligned. The operation and the activation/deactivation sequence of the same correspond to the description provided above.

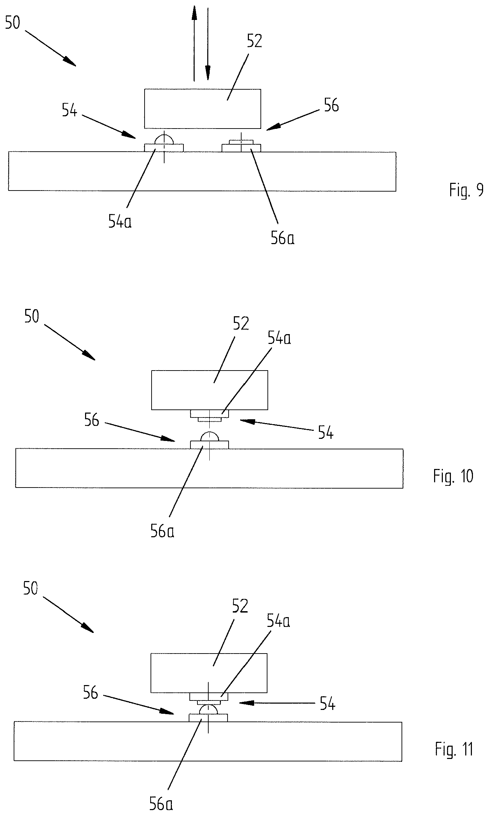

The embodiment shown in Figure 9 differs from the embodiment described above with reference to Figure 2 in that the movable element 52 acts on the first generation means 54 (switch 54a) and on the second generation means 56 (switch 56a) through a linear movement, not a rotary movement, towards or away from said switches 54a, 56a. The two switches 54a, 56a are preferably arranged side by side.

The operation and the activation/deactivation sequence of the same correspond to the description provided above.

The embodiment shown in Figure 10 differs from the embodiment described above with reference to Figure 9 in that the two switches 54a, 56a are preferably arranged so that they are aligned with each other with respect to the linear movement of the movable element 52 and in that the movable element 52 carries one of said switches 54a.

The movement of the movable element 52 brings the first switch 54a in contact with the second switch 56a, as shown in Figure 11.

The delay in the activation of the second switch 56a with respect to the first switch 54a in this case is obtained through the use of differentiated switches requiring a different activation force and/or having different activation strokes, in particular a smaller activation force for the first switch 54a with respect to the second switch 56a. Analogously, the delay in the deactivation of the first switch 54a with respect to the second switch 56a at the moment of release of the movable element 52 is obtained thanks to said differentiated characteristics of the two switches.

The operation and the activation/deactivation sequence of the same correspond to the description provided above.

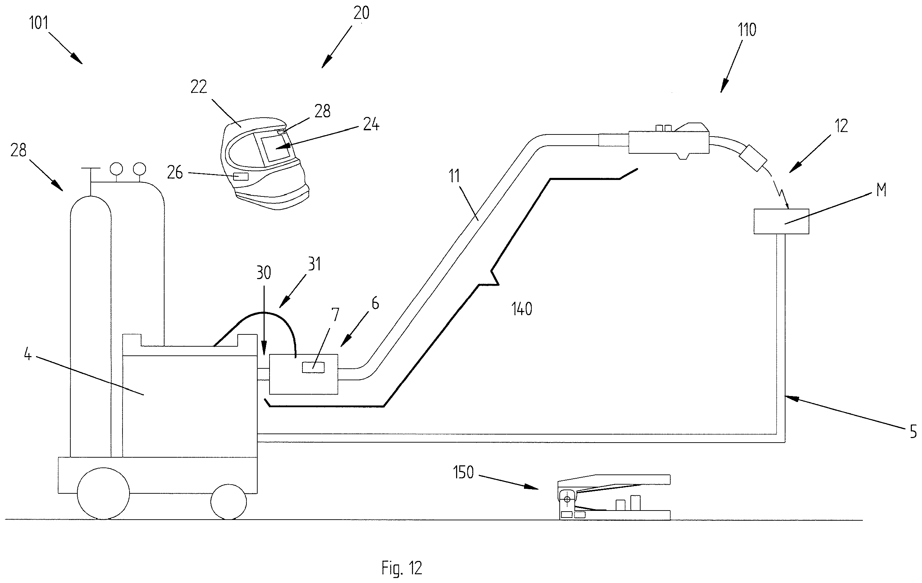

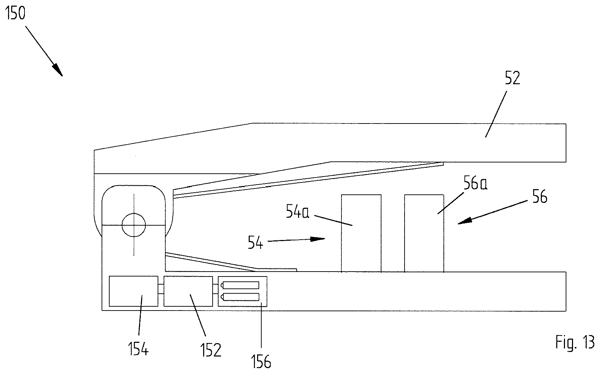

Figures 12 and 13 show a variant embodiment 101 of the system that is the subject of the invention.

Said embodiment differs from the embodiment illustrated and described with reference to Figure 1 in that the switch unit 150, better illustrated in Figure 13, is not associated with the torch 110, but represents a unit in itself, preferably a unit suited to be activated by the operator with his/her foot, or a pedal.

In Figure 12, the switch unit 150 is shown when positioned on the ground, so that it can be activated by the operator with his/her foot. In this case, the size of the switch unit 150 will advantageously be larger compared to that of the unit described above, so that it can be comfortably activated by the operator with his/her foot.

In this embodiment, the torch 110 is advantageously without controls. Advantageously, the control cables between the torch 110 and the control unit 6 can be omitted, thus simplifying the production process of the connection element 140 that connects the generator 4 to the torch 110, and the production process of the torch 110 itself.

Figure 13 shows the switch unit 150 according to said preferred embodiment. The component parts equal or equivalent to those present in the preferred embodiment described above with reference to Figures from 2 to 4 are identified by the same reference numbers.

The switch unit 150 comprises a movable actuator element 52 suited to be activated by the operator, first generation means 54 suited to generate a first signal S1 and second generation means 56 suited to generate a second signal S2. The movable actuator element 52 preferably comprises a lever 52 suited to be rotated around its fulcrum.

The switch unit 150 furthermore comprises a control unit 152 for the acquisition of the signals generated by the switches 54a, 56a, wireless signal transmission means 154 and a power supply unit 156.

The transmission means 154 preferably communicate with the first transmission/reception means 7 of the control unit 6.

The transmission means 154 preferably comprise a radio frequency unit. Preferably, said radio frequency unit is of the Bluetooth^{®} or ZigBee or Enocean type.

In a preferred variant embodiment, the first transmission/reception means 154 preferably comprise an infrared unit.

The power supply unit 156 preferably comprises one or more batteries, if necessary of the rechargeable type.

The switch unit 150 according to said embodiment generates the same sequential signals S1, S2, S3, S4 described above. Differently from what has been described above, said signals are acquired by the control unit 6 in wireless mode.

It is evident that the switch unit can be configured according to any of the variant embodiments shown and described herein, in particular with reference to Figures from 7 to 11.

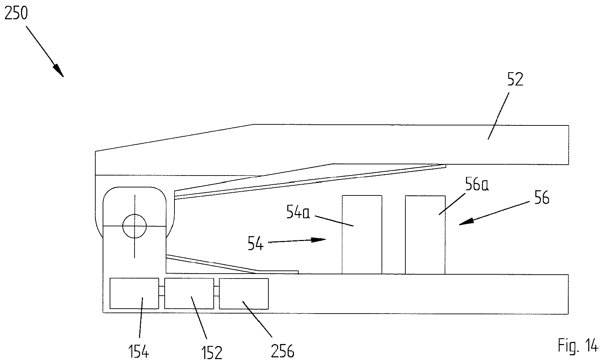

Figure 14 shows a variant embodiment 250 of the switch unit that is the subject of the invention.

This embodiment differs from the embodiment illustrated and described with reference to Figure 13 in that the power supply unit 256 preferably comprises an electric energy generator, more preferably an induction generator.

Said electric energy generator advantageously transforms the mechanical energy deriving from the movement of the movable element 52 into electric energy.

More specifically, during the activation of the movable element 52 a voltage pulse is generated that is capable of supplying power to the control unit 152 and the transmission means 154. For the duration of said pulse, the switch unit 250 detects the activation of the two switches 54a, 56a and sends the respective signals S1, S2 to the control unit 6.

Analogously, during the release of the movable element 52 a voltage pulse is generated that is capable of supplying power to the control unit 152 and the transmission means 154. For the duration of said pulse, the switch unit 250 detects the release of the two switches 54a, 56a and sends the respective signals S3, S4 to the control unit 6.

In this case, it is evident that the signals generated by the switch unit 250 will follow the diagram illustrated in Figure 6, the switch unit 250 being powered only when the movable element 52 (pedal) is moved, that is, activated and released.

Advantageously, the switch unit 250 makes it possible to reduce the difficulty of managing the signals, the construction complexity of the system, and its construction and/or maintenance costs.

In the embodiments described herein, the deactivation of the protection unit is obtained by means of a specific signal, more specifically the fourth signal S4, which is generated by the switch unit of the invention, too.

In a preferred variant embodiment, the deactivation of the protection unit is not obtained through a specific deactivation signal but takes place automatically, wherein the protection unit is advantageously provided with optical sensors 28. In this case, the deactivation of the protection unit takes place after the extinction of the welding arc 12, when the optical sensors 28 detect a radiation value that is below a given level.

Preferably, and in order to achieve a higher level of safety, the deactivation of the protection unit 20 depends on the detection action of said optical sensors 28, while any deactivation signal received, for example the deactivation signal S4, is ignored by the protection unit 20 itself.

It has thus been shown, by means of the preceding detailed description of the embodiments of the present invention illustrated in the drawings, that the present invention makes it possible to achieve the desired objects while at the same time minimizing the drawbacks observed in the known technique.

It should also be noted that, even if the present invention has been illustrated by means of the preceding detailed description of its embodiments represented in the drawings, the present invention is not limited to the embodiments described above and represented in the drawings. On the contrary, all the variants and modifications of the embodiments described and represented herein which are clear and obvious for the experts in the art fall within the scope of the present invention as defined in the appended claims.

## Claims

1. Welding and/or cutting system (1; 101), comprising
a generator (4),
a welding and/or cutting torch (10; 110),
a control unit (6) and
a switch unit (50; 150; 250) suited to be activated by an operator for the purpose of carrying out a welding and/or cutting operation through the activation of said generator (4),
**characterised in that** said switch unit (50; 150; 250) comprises:
- a movable actuator element (52), suited to be activated by said operator;
- first generation means (54) suited to generate a signal (S1; S4);
- second generation means (56) suited to generate a signal (S2; S3);
said first generation means (54) and said second generation means (56) being activated in sequence by said movable element (52) during its movement, in such a way that said second generation means (56) generate a second signal (S2) with a predetermined delay (DT) with respect to a first signal (S1) generated by said first generation means (54),
**and further in that** said system (1; 101) furthermore comprises a protection unit (20) for said operator, comprising a protection shield (24), preferably an LCD filter,
**in that** said protection unit (20) can be activated by an activation signal, and **in that**
the first signal (S1) and the second signal (S2) are acquired by the control unit (6) and respectively correspond to the activation signal of the protection unit (20) and to an activation signal of the generator (4).

2. System (1; 101) according to claim 1, **characterized in that** said first generation means (54) comprise a first switch (54a) and/or said second generation means (56) comprise a second switch (56a).

3. System (1; 101) according to any of the preceding claims, **characterized in that** said first switch (54a) is activated at the end of a first stroke of said movable element (52) and said second switch (56a) is activated at the end of a second stroke of said movable element (52), said second stroke being longer than said first stroke.

4. System (1; 101) according to any of the preceding claims, **characterized in that** said first signal (S1) and said second signal (S2) are generated by said first generation means (54) and said second generation means (56), respectively, during the movement of said movable element (52) in a first activation direction.

5. System (1; 101) according to claim 4, **characterized in that** said second generation means (56) and said first generation means (54) are activated in sequence by said movable element (52) during its movement in a second release direction opposite said first activation direction, in such a way that said first generation means (54) generate a fourth signal (S4) with a predetermined delay (DT') with respect to a third signal (S3) generated by said second generation means (56).

6. System (1; 101) according to any of the preceding claims, **characterized in that** said switch unit (150; 250) furthermore comprises a wireless signal transmission unit (154) suited to transmit said first signal and/or said second signal.

7. System (1; 101) according to any of the preceding claims, **characterized in that** said protection unit (20) comprises a receiver unit (26) suited to receive wireless signals.

## Patentansprüche

1. Schweiß- und/oder Schneidsystem (1; 101), bestehend aus:
einem Generator (4),
einem Schweiß- und/oder Schneidbrenner (10; 110),
einer Steuereinheit (6) und
einer Schalteinheit (50; 150; 250), die von einer Bedienperson aktiviert werden kann, um durch die Aktivierung des besagten Generators (4) einen Schweiß- und/oder Schneidvorgang auszuführen,
**dadurch gekennzeichnet, dass** die besagte Schalteinheit (50; 150; 250) die folgenden Elemente umfasst:
- ein bewegliches Betätigungselement (52), das von der besagten Bedienperson betätigt werden kann;
- erste Erzeugungsmittel (54), die zur Erzeugung eines Signals (S1; S4) geeignet sind;
- zweite Erzeugungsmittel (56), die zur Erzeugung eines Signals (S2; S3) geeignet sind;
wobei die besagte erste Erzeugungsmittel (54) und die besagte zweite Erzeugungsmittel (56) nacheinander durch das besagte bewegliche Element (52) während seiner Bewegung aktiviert werden, sodass die besagte zweite Erzeugungsmittel (56) ein zweites Signal (S2) mit einer vorbestimmten Verzögerung (DT) in Bezug auf ein von der besagten ersten Erzeugungsmitteln (54) erzeugtes erstes Signal (S1) erzeugen,
**und zudem dadurch, dass** das besagte System (1; 101) ferner eine Schutzeinheit (20) für die besagte Bedienperson umfasst, die eine Schutzabschirmung (24), vorzugsweise einen LCD-Filter, aufweist,
dass die besagte Schutzeinheit (20) durch ein Aktivierungssignal aktiviert werden kann, und dass das erste Signal (S1) und das zweite Signal (S2) von der Steuereinheit (6) erfasst werden und jeweils dem Aktivierungssignal der Schutzeinheit (20) und einem Aktivierungssignal des Generators (4) entsprechen.

2. System (1; 101) nach Patentanspruch 1, **dadurch gekennzeichnet, dass** die besagte erste Erzeugungsmittel (54) einen ersten Schalter (54a) und/oder die besagte zweite Erzeugungsmittel (56) einen zweiten Schalter (56a) umfassen.

3. System (1; 101) nach jeglichem der vorhergehenden Patentansprüche, **dadurch gekennzeichnet, dass** der besagte erste Schalter (54a) am Ende eines ersten Hubs des besagten beweglichen Elements (52) aktiviert wird und der besagte zweite Schalter (56a) am Ende eines zweiten Hubs des besagten beweglichen Elements (52) aktiviert wird, wobei der besagte zweite Hub länger als der besagte erste Hub ist.

4. System (1; 101) nach jeglichem der vorhergehenden Patentansprüche, **dadurch gekennzeichnet, dass** das besagte erste Signal (S1) und das besagte zweite Signal (S2) je durch die besagte erste Erzeugungsmittel (54) und die besagte zweite Erzeugungsmittel (56) während der Bewegung des besagten beweglichen Elements (52) in einer ersten Aktivierungsrichtung erzeugt werden.

5. System (1; 101) nach Patentanspruch 4, **dadurch gekennzeichnet, dass** die besagte zweite Erzeugungsmittel (56) und die besagte erste Erzeugungsmittel (54) nacheinander durch das besagte bewegliche Element (52) während seiner Bewegung in einer zweiten Freigaberichtung, die der besagten ersten Aktivierungsrichtung entgegengesetzt ist, in der Weise aktiviert werden, dass die besagte erste Erzeugungsmittel (54) ein viertes Signal (S4) mit einer vorbestimmten Verzögerung (DT') in Bezug auf ein drittes Signal (S3) erzeugt, das durch die besagte zweite Erzeugungsmittel (56) erzeugt wird.

6. System (1; 101) nach jeglichem der vorhergehenden Patentansprüche, **dadurch gekennzeichnet, dass** die besagte Schalteinheit (150; 250) ferner eine drahtlose Signalübertragungseinheit (154) umfasst, die geeignet ist, das besagte erste Signal und/oder das besagte zweite Signal zu übertragen.

7. System (1; 101) nach jeglichem der vorhergehenden Patentansprüche, **dadurch gekennzeichnet, dass** die besagte Schutzeinheit (20) eine Empfängereinheit (26) umfasst, die dazu geeignet ist, drahtlose Signale zu empfangen.

## Revendications

1. Système de soudage et/ou de coupe (1 ; 101), comprenant
un générateur (4),
un chalumeau de soudage et/ou de coupe (10 ; 110),
une unité de commande (6) et
une unité de commutation (50 ; 150 ; 250) indiquée pour être activée par un opérateur dans le but d'effectuer une opération de soudage et/ou de coupe par l'activation dudit générateur (4),
**caractérisé en ce que** ladite unité de commutation (50 ; 150 ; 250) comprend :
- un élément actionneur mobile (52), indiqué pour être activé par ledit opérateur ;
- un premier moyen de génération (54) indiqué pour générer un signal (S1; S4) ;
- un deuxième moyen de génération (56) indiqué pour générer un signal (S2 ; S3) ;
ledit premier moyen de génération (54) et ledit deuxième moyen de génération (56) étant activés en séquence par ledit élément mobile (52) pendant son mouvement, de manière à ce que ledit deuxième moyen de génération (56) génère un deuxième signal (S2) avec un retard prédéterminé (DT) par rapport à un premier signal (S1) généré par ledit premier moyen de génération (54),
**et en outre en ce que** ledit système (1 ; 101) comprend également une unité de protection (20) pour ledit opérateur, comprenant un écran de protection (24), de préférence un filtre LCD,
**en ce que** ladite unité de protection (20) peut être activée par un signal d'activation, et **en ce que** le premier signal (S1) et le deuxième signal (S2) sont acquis par l'unité de commande (6) et correspondent respectivement au signal d'activation de l'unité de protection (20) et à un signal d'activation du générateur (4).

2. Système (1 ; 101) selon la revendication 1, **caractérisé en ce que** lesdits premiers moyens de génération (54) comprennent un premier commutateur (54a) et/ou lesdits deuxièmes moyens de génération (56) comprennent un deuxième commutateur (56a).

3. Système (1 ; 101) selon l'une quelconque des revendications précédentes, **caractérisé en ce que** ledit premier commutateur (54a) est activé à la fin d'une première course dudit élément mobile (52) et ledit deuxième commutateur (56a) est activé à la fin d'une deuxième course dudit élément mobile (52), ladite deuxième course étant plus longue que ladite première course.

4. Système (1 ; 101) selon l'une quelconque des revendications précédentes, **caractérisé en ce que** ledit premier signal (S1) et ledit deuxième signal (S2) sont générés par lesdits premiers moyens de génération (54) et lesdits deuxièmes moyens de génération (56), respectivement, pendant le mouvement dudit élément mobile (52) dans une première direction d'activation.

5. Système (1 ; 101) selon la revendication 4, **caractérisé en ce que** lesdits deuxièmes moyens de génération (56) et lesdits premiers moyens de génération (54) sont activés en séquence par ledit élément mobile (52) pendant son mouvement dans une deuxième direction de déclenchement opposée à ladite première direction d'activation, de manière à ce que lesdits premiers moyens de génération (54) génèrent un quatrième signal (S4) avec un retard prédéterminé (DT') par rapport à un troisième signal (S3) généré par lesdits deuxièmes moyens de génération (56).

6. Système (1 ; 101) selon l'une quelconque des revendications précédentes, **caractérisé en ce que** ladite unité de commutation (150 ; 250) comprend en outre une unité de transmission de signaux sans fil (154) indiquée pour transmettre ledit premier signal et/ou ledit deuxième signal.

7. Système (1 ; 101) selon l'une quelconque des revendications précédentes, **caractérisé en ce que** ladite unité de protection (20) comprend une unité réception (26) indiquée pour recevoir des signaux sans fil.
